# EUROPEAN PATENT APPLICATION

(11) **EP 4 706 975 A1**
(43) Date of publication of application: **11.03.2026**
(21) Application number: 25201009.5
(22) Date of filing: 09.09.2025
(51) Int. Cl.: B41J 29/02, G03G 15/00, G03G 21/16, H04N 1/00

(54) **IMAGE FORMING APPARATUS AND METHOD FOR MANUFACTURING IMAGE FORMING APPARATUS**

(30) Priority: 10.09.2024 JP 2024156549
(71) Applicant: Canon Kabushiki Kaisha, Tokyo, 146-8501 (JP)
(72) Inventor: SHIMOI, Yasuhiro, Ohta-ku, Tokyo, 146-8501 (JP)
(74) Representative: TBK

(57) **Abstract**

An image forming apparatus configured to form an image on a recording material, the image forming apparatus includes a first casing including a first frame, a second casing including a second frame (121), the second casing being connected to the first casing and configured to be separable in a vertical direction from the first casing, and a wiring unit (203) including wiring (201) connected to an electrical component. The second frame (121) includes a mounting portion (1231, 1241) to which the wiring unit (203) is mounted. The mounting portion (1231, 1241) is provided with at least one opening on a side facing the first frame. The opening is at least partially covered by a part of the first frame in a state in which the first casing and the second casing are connected to each other.

## Description

### TECHNICAL FIELD

This disclosure relates to an image forming apparatus such as a printer, a copier, a facsimile, and an integrated machine, and a method for manufacturing the image forming apparatus.

### BACKGROUND

In image forming apparatuses, electrical components, such as motors, sensors, switches, fans, control circuit boards for performing the control of these components, and power sources are disposed. These electrical components are generally, in most cases, disposed on a rear side of the image forming apparatuses. However, due to spatial constraints, some of the electrical components are disposed on a front side of the image forming apparatuses. In such cases, so as to electrically connect the electrical components arranged on the front side and the rear side via wiring, wiring is disposed from the front side to the rear side within apparatus bodies of the image forming apparatuses. In the apparatus described in Japanese Patent Laid-Open No. 2022-175261, by mounting a wiring unit, which includes wiring, to extend between a front panel on a front side and a rear panel on a rear side within a pre-assembled apparatus body, it is proposed to enhance the workability of an operation for mounting the wiring, and thereby improve the assemblability, replaceability, and maintainability of electrical components.

However, hitherto, in order to mount wiring within apparatus bodies, wiring units need to be assembled while maneuvering around struts and stays constituting the apparatus bodies, which results in increased labor.

### SUMMARY

This disclosure provides an image forming apparatus that further improves the workability of an operation for mounting wiring within an apparatus body.

The present disclosure in its first aspect provides an exposure apparatus as specified in claim 1. Optional features are specified in claim 2 to 9.

The present disclosure in its second aspect provides an exposure method as specified in claim 10. Optional features are specified in claim 11 to 14.

The present disclosure in its third aspect provides an exposure method as specified in claim 15.

Features of the present disclosure will become apparent from the following description of embodiments with reference to the attached drawings. The following description of embodiments is described by way of example.

### BRIEF DESCRIPTION OF THE DRAWINGS

FIG. 1 is a schematic diagram illustrating a configuration of an image forming apparatus of this embodiment.
FIG. 2 is a schematic diagram illustrating a separation configuration in the image forming apparatus.
FIG. 3A is a schematic diagram illustrating a sheet discharge frame.
FIG. 3B is a schematic diagram illustrating an imaging frame.
FIG. 3C is a schematic diagram illustrating a sheet supply frame.
FIG. 4A is a perspective view illustrating a wiring assembly configuration of a first embodiment.
FIG. 4B is a perspective view illustrating the wiring assembly configuration of the first embodiment.
FIG. 5 is a schematic diagram illustrating a relay connector portion.
FIG. 6 is a perspective view illustrating a wiring unit with a separation configuration.
FIG. 7 is a top view illustrating the wiring unit with the separation configuration.
FIG. 8 is a perspective view illustrating a wiring assembly configuration of a second embodiment.
FIG. 9 is a cross-sectional view illustrating wire saddles in the second embodiment.
FIG. 10A is a perspective view illustrating a wiring assembly configuration of a third embodiment.
FIG. 10B is a perspective view illustrating a wiring assembly configuration of a third embodiment.
FIG. 11 is a perspective view illustrating a wiring assembly configuration of a fourth embodiment.

### DESCRIPTION OF THE EMBODIMENTS

### First Embodiment

### Image Forming Apparatus

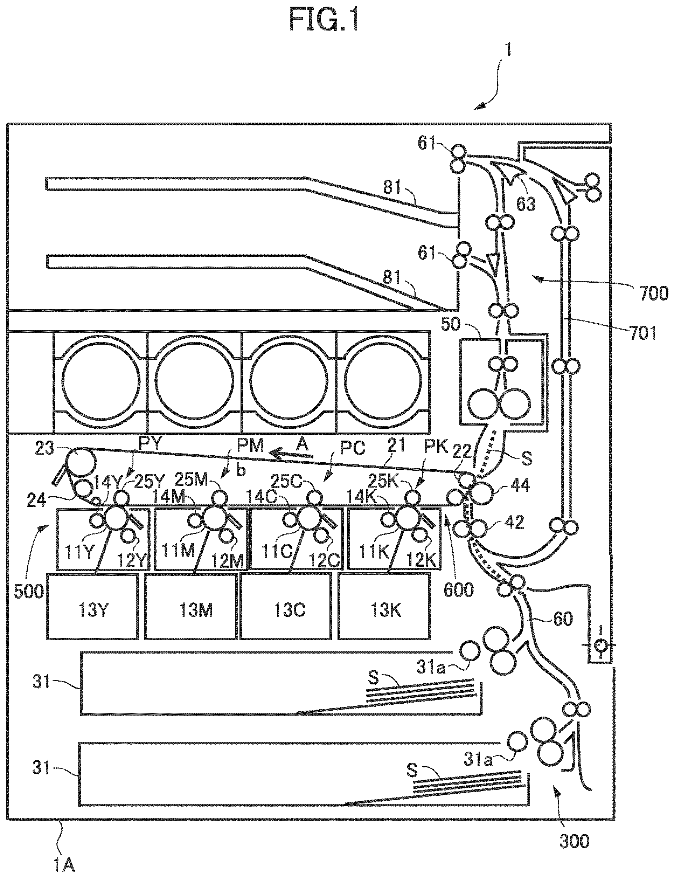

Hereinafter, this embodiment will be described. First, using FIG. 1, a schematic configuration of an image forming apparatus of this embodiment will be described. To be noted, in the following description, "front" and "rear" respectively refer to a front side and a rear side of the image forming apparatus, and "right" and "left" correspond to a right side and a left side as viewed from the front side of the image forming apparatus. The front side of the image forming apparatus refers to a side from which a user operates the image forming apparatus, and, for example, it is the side on which an operation panel is arranged, or the side from which a sheet feed cassette storing a recording material is extracted. In addition, "vertical direction" refers to a vertical direction in a state in which the image forming apparatus is installed on a floor or the like. In FIG. 1, the image forming apparatus 1 is illustrated as viewed from the front side.

The image forming apparatus 1 illustrated in FIG. 1 is a full color printer of an intermediate transfer system. Image forming portions PY, PM, PC, and PK, which respectively form toner images of yellow (Y), magenta (M), cyan (C), and black (K), are arranged to face an intermediate transfer belt 21. The image forming apparatus 1 includes an image forming unit 500. The image forming unit 500 forms the toner image on a recording material S based on an image signal received from a document reading apparatus or an external device such as a personal computer, not shown. The image forming unit 500 includes the image forming portions PY, PM, PC, and PK and an intermediate transfer unit 600.

A conveyance process of the recording material S in the image forming apparatus 1 will be described. The recording material S is stored in a stacked manner in one or a plurality (in this case, two) of sheet feed cassettes 31. The conveyance of the recording material S is started by a sheet supply unit 300. The sheet supply unit 300 includes a sheet supply roller 31a. The recording material S is supplied one sheet at a time from the sheet feed cassette 31 to a conveyance path 60 by the sheet supply roller 31a in synchronization with the timing of image formation. In the image forming apparatus 1 of this embodiment, the conveyance path 60 is disposed in a manner capable of conveying the recording material S from the lower side toward the upper side (so-called vertical conveyance system). This conveyance direction is an example, and the recording material S may be configured to be conveyed in a lateral direction (horizontal direction) depending on the apparatus configuration. The recording material S may encompass various types of sheet materials, including paper such as plain paper, thick paper, rough paper, embossed paper, and coated paper, a plastic film, cloth, and the like.

The recording material S which has been supplied from the sheet feed cassette 31 to the conveyance path 60 is conveyed to a registration roller pair 42 arranged midway along the conveyance path 60. The registration roller pair 42 corrects the skew of the recording material S, and conveys the recording material S, whose skew has been corrected, to a secondary transfer nip portion formed by a secondary transfer inner roller 22 and a secondary transfer outer roller 44.

With respect to the conveyance process of the recording material S to the secondary transfer nip portion described above, an image forming process of the toner image which is conveyed to the secondary transfer nip portion at a similar timing will be described. First, the image forming portions PY to PK will be described. However, since the image forming portions PY to PK of each color are essentially the same except for the color of toner, in the following, the image forming portion PY for yellow will be described as a representative example.

The image forming portion PY includes a photosensitive drum 11Y, a charge unit 12Y, an exposing unit 13Y, and a developing unit 14Y. A surface of the photosensitive drum 11Y, which is rotatably driven, is uniformly charged by the charge unit 12Y beforehand, and, thereafter, an electrostatic latent image is formed by laser light emitted from the exposing unit 13Y driven based on the image signal. Then, the electrostatic latent image formed on the photosensitive drum 11Y is developed to the toner image by the developing unit 14Y. The developing unit 14Y develops the electrostatic latent image into the toner image using developer containing the toner and a carrier. The toner image developed on the photosensitive drum 11Y is applied with a primary transfer voltage by a primary transfer roller 25Y, which is arranged opposite the photosensitive drum 11Y across the intermediate transfer belt 21, and, thereby, is primarily transferred from the photosensitive drum 11Y onto the intermediate transfer belt 21.

The intermediate transfer belt 21 is an endless belt, and is moved in an arrow A direction in FIG. 1 by being tensioned by the secondary transfer inner roller 22, a drive roller 23, a tension roller 24, and the like. While applying tension to the intermediate transfer belt 21, the tension roller 24 is rotatably driven in conjunction with the movement of the intermediate transfer belt 21 driven by the drive roller 23. The image forming processes for each color, which are processed in parallel by the image forming portions PY to PK of each color described above, are performed with timing such that the toner images of each color are sequentially overlaid onto the toner image that has been primarily transferred onto the intermediate transfer belt 21 upstream in the movement direction. As a result, eventually, the full color toner image is formed on the intermediate transfer belt 21. To be noted, the primary transfer rollers 25Y to 25K, the intermediate transfer belt 21, the secondary transfer inner roller 22, the drive roller 23, and the tension roller 24 are integrally configured as the intermediate transfer unit 600.

With the conveyance process and the image forming process each described above, the timing of the recording material S and the full color toner image are synchronized at the secondary transfer nip portion, and secondary transfer by which the toner image is transferred from the intermediate transfer belt 21 onto the recording material S is executed. By applying a predetermined pressure force and a secondary transfer voltage with respect to the recording material S, which is nipped and conveyed at the secondary transfer nip portion, the toner image is transferred from the intermediate transfer belt 21 onto the recording material S.

The recording material S onto which the toner image has been transferred is conveyed to a fixing unit 50 via the conveyance path 60, and, by being applied with heat and pressure in the fixing unit 50, the toner image is fixed on the recording material S. The fixing unit 50 includes a fixing roller that is heated by a heater, not shown, and a pressing roller that forms a fixing nip portion by coming into contact with the fixing roller, and fixes the toner image on the recording material S by applying the heat and pressure with respect to the recording material S that passes through the fixing nip portion.

The recording material S on which the toner image has been fixed by the fixing unit 50 is further conveyed upward via the conveyance path 60, and is discharged outside by a sheet discharge unit 700. The sheet discharge unit 700 includes a sheet discharge roller 61, and the recording material S is discharged onto a sheet discharge tray 81 by the sheet discharge roller 61. In this embodiment, in a case of a duplex mode in which the image is formed on both surfaces of the recording material S, in order to form the image also on a second surface of the recording material S on which the image has been formed on its first surface, the recording material S is conveyed to a duplex conveyance path 701 for reversing a recording surface. In the duplex mode, the recording material S is conveyed by the forward rotation of the sheet discharge roller 61 until a trailing edge passes through a flapper 63; thereafter, by reversing the rotation of the sheet discharge roller 61, the leading and trailing edges are interchanged, and the recording material S is conveyed to the duplex conveyance path 701. The recording material S which has been conveyed to the duplex conveyance path 701 is again returned to the registration roller pair 42. Since subsequent conveyance and image forming processes on the second surface are the same as those described above, the description will be omitted. The recording material S on which the image has been formed on both surfaces is discharged outside by the sheet discharge unit 700.

### Apparatus Body

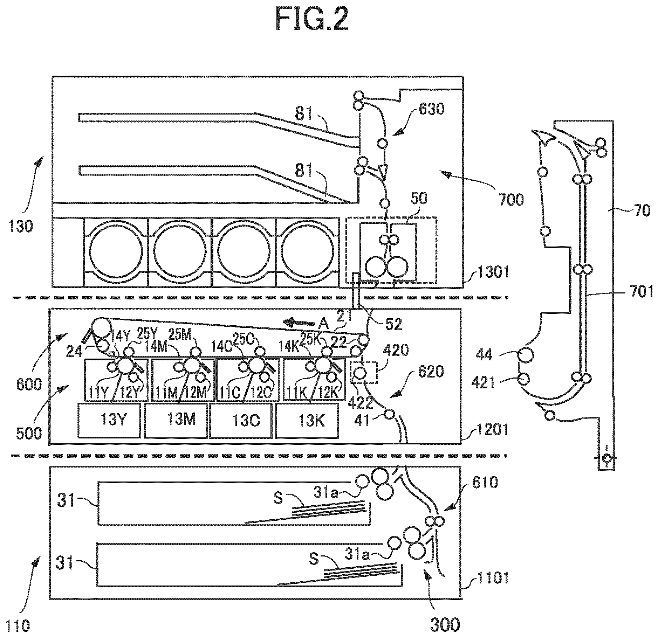

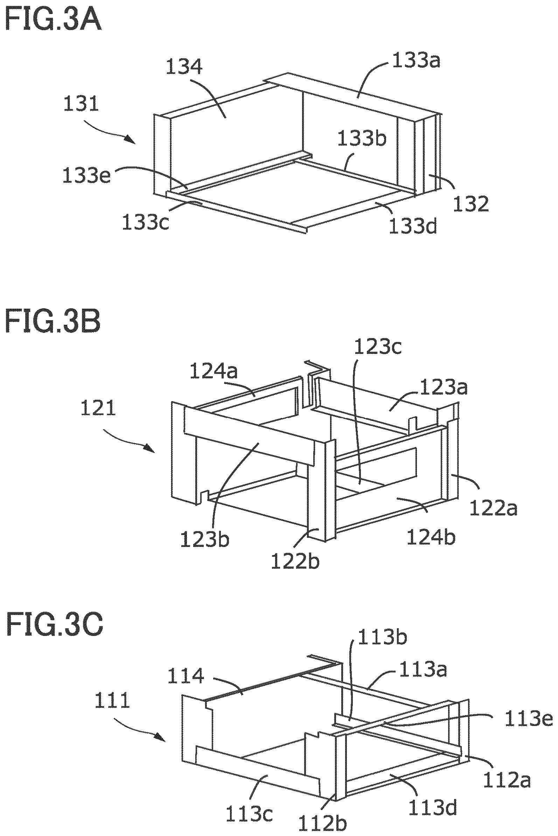

Next, with reference to FIG. 1, using FIGS. 2 to 3C, an apparatus body 1A of this embodiment will be described. In the case of this embodiment, as illustrated in FIG. 2, the apparatus body 1A is divided into three separable structures: a sheet supply block 110, an imaging block 120, and a sheet discharge block 130. In other words, the sheet supply, imaging, and sheet discharge blocks 110, 120, and 130 are vertically connected in a state in which the three blocks can be separated from each other. In this specification, the term "structure" refers to a configuration in which various units and components are installed within a casing formed by frame portions such as struts, stays (beams), and side plates. In addition, the term "connection" in this embodiment refers to a functional linkage. For example, even in a state in which the sheet discharge block 130 is merely placed on top of the imaging block 120, in a case where the two are functionally integrated to perform the image formation, it can be said that the sheet discharge and imaging blocks 130 and 120 are connected. As illustrated in FIGS. 3A to 3C, a casing 1101 of the sheet supply block 110, a casing 1201 of the imaging block 120, and a casing 1301 of the sheet discharge block 130 respectively include a sheet supply frame 111, an imaging frame 121, and a sheet discharge frame 131. In order to allow the casings 1101, 1201, and 1301 to be individually separated, the sheet supply, imaging, and sheet discharge frames 111, 121, and 131 are connected in a separable manner with respect to each other.

Returning to FIG. 2, in this embodiment, the apparatus body 1A, which implements a series of functions for forming the image on the recording material S, is configured such that the imaging block 120 is stacked on top of the sheet supply block 110, and the sheet discharge block 130 is stacked on top of the imaging block 120. While the illustration is omitted, the stacked imaging and sheet discharge blocks 120 and 130 are connected, for example, by fastening a metallic plate-shaped member (connecting member), which extends across vertically aligned struts, with screws. Similarly, the sheet supply and imaging blocks 110 and 120 are also connected by a connecting member.

In addition, in this embodiment, a duplex conveyance block 70, in which the duplex conveyance path 701 is formed, is provided in advance as a separate structure from the sheet supply, imaging, and sheet discharge blocks 110, 120, and 130. The duplex conveyance block 70 is pivotably mounted with respect to the sheet supply or imaging block 110 or 120 so as to extend between the imaging and sheet discharge blocks 120 and 130. That is, the duplex conveyance block 70 is separated at interfaces with the imaging and sheet discharge blocks 120 and 130. The duplex conveyance block 70 forms the conveyance path 60 (refer to FIG. 1) with the imaging and sheet discharge blocks 120 and 130. The conveyance path 60 is formed when the duplex conveyance block 70 is in a closed position, and is opened when the duplex conveyance block 70 is in an opening position. Thereby, in a case where the recording material S is jammed in the conveyance path 60, by opening the duplex conveyance block 70, which pivots in an openable and closable manner, the user can remove a jammed recording material S from the conveyance path 60. To open the conveyance path 60, a roller 421, which constitutes one side of the rollers of the registration roller pair 42, the secondary transfer outer roller 44, and rollers, which constitute one side of the rollers of roller pairs conveying the recording material S in the conveyance path 60, are disposed in the duplex conveyance block 70. To be noted, in the closed state, the duplex conveyance block 70 is locked by a locking mechanism (not shown) disposed in the sheet discharge block 130 to prevent the conveyance path 60 from opening automatically.

### Sheet Supply, Imaging, and Sheet Discharge Blocks

The sheet supply block 110 is a structure in which the sheet supply unit 300 and a sheet supply conveyance portion 610 are disposed in the sheet supply frame 111. In addition, a supporting portion (not shown) such as a rail member that slidably supports the sheet feed cassette 31 in a front/back direction is assembled into the sheet supply block 110. The imaging block 120 is a structure in which the image forming unit 500, which includes the intermediate transfer unit 600, and an imaging conveyance portion 620 are disposed in the imaging frame 121. The image forming unit 500 may be detachably disposed in the imaging frame 121. The sheet discharge block 130 is a structure in which the sheet discharge unit 700, a sheet discharge conveyance portion 630, the fixing unit 50, and the like are disposed in the sheet discharge frame 131.

In this embodiment, the conveyance path 60 that conveys the recording material S from the lower side toward the upper side is formed separately in each of the sheet supply, imaging, and sheet discharge blocks 110, 120, and 130. That is, the sheet supply conveyance portion 610 forms part of the conveyance path 60 in the sheet supply block 110, the imaging conveyance portion 620 forms part of the conveyance path 60 in the imaging block 120, and the sheet discharge conveyance portion 630 forms part of the conveyance path 60 in the sheet discharge block 130. In this embodiment, since the vertical conveyance path 60 is adopted, the sheet supply, imaging, and sheet discharge blocks 110, 120, and 130 are vertically stacked.

As illustrated in FIG. 3A, the sheet discharge frame 131 includes a right front frame portion 132, a right upper frame portion 133a, a right lower frame portion 133b, a left lower frame portion 133c, a front lower frame portion 133d, a rear lower frame portion 133e, and a rear side plate 134. As illustrated in FIG. 3B, the imaging frame 121 includes a right front frame portion 122a, a left front frame portion 122b, a right upper frame portion 123a, a left upper frame portion 123b, a right lower frame portion 123c, a rear side plate 124a, serving as a first frame portion, and a front side plate 124b, serving as a second frame portion arranged to be separated from the rear side plate 124a. As illustrated in FIG. 3C, the sheet supply frame 111 includes a right front frame portion 112a, a left front frame portion 112b, a right upper frame portion 113a, a right lower frame portion 113b, a left lower frame portion 113c, a front lower frame portion 113d, a front upper frame portion 113e, and a rear side plate 114.

These sheet discharge, imaging, and sheet supply frames 131, 121, and 111 are connected by being stacked in the vertical direction (longitudinal direction). In the case of this embodiment, in a state in which the sheet discharge and imaging frames 131 and 121 are stacked, when viewed from above, at least the rear side plate 134 of the sheet discharge frame 131 and the rear side plate 124a of the imaging frame 121 overlap. In addition, in a state in which the imaging and sheet supply frames 121 and 111 are stacked, when viewed from above, at least the rear side plate 124a of the imaging frame 121 and the rear side plate 114 of the sheet supply frame 111 overlap. In this state, the sheet discharge and imaging frames 131 and 121, and the imaging and sheet supply frames 121 and 111 are connected by the connecting members, not shown. Thus, by connecting the plurality of frames (131, 121, 111), the image forming apparatus 1 that can implement a series of operations related to the image formation on the recording material using units and components disposed in each of the plurality of frames (131, 121, 111) is provided.

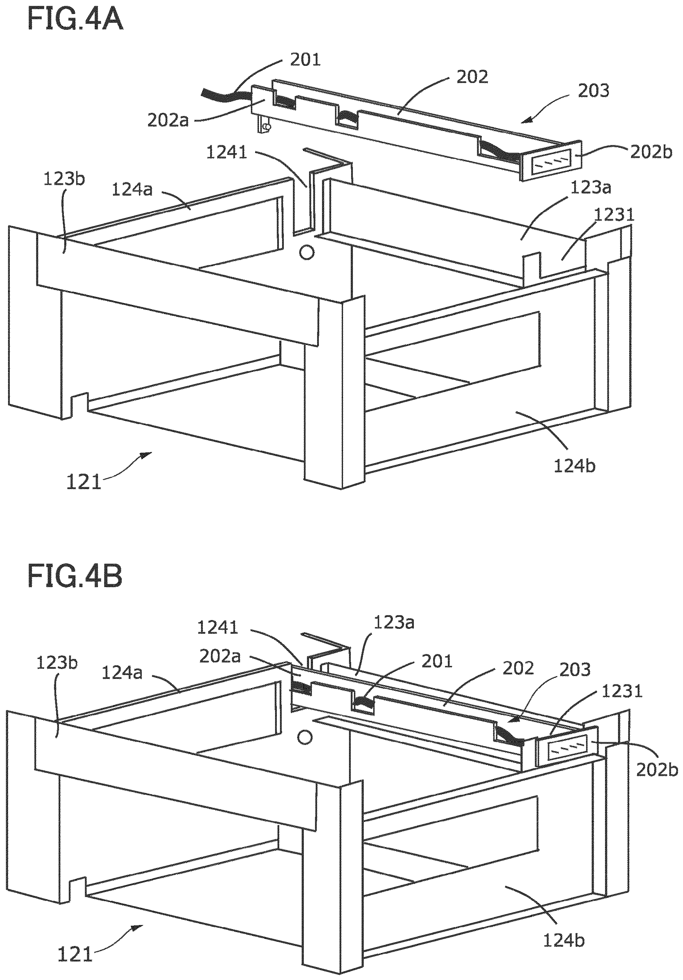

While the illustration is omitted herein, the image forming apparatus 1 includes, for example, electrical components such as various motors, various sensors and switches, and fans, and control circuit boards that manage these electrical components. The electrical components and control circuit boards are mainly arranged on the rear side (back side) of the image forming apparatus 1; however, some of the electrical components are arranged on the front side (face side) of the image forming apparatus 1. Therefore, with respect to the electrical components arranged on the front side of the image forming apparatus 1, it is necessary for the operator to perform an operation for mounting wiring that electrically connects the electrical components to the control circuit boards, which are arranged on the rear side of the image forming apparatus 1. In the case of this embodiment, a wiring unit including the wiring is assembled by the operator to extend between the front side plate on the front side and the rear side plate on the rear side within the apparatus body. In this embodiment, the wiring unit is arranged between the sheet discharge and imaging frames 131 and 121, which are in a state of being vertically connected. Then, it is configured such that the operator can easily mount the wiring with respect to the imaging frame 121, which is in a state in which the sheet discharge frame 131 is separated, in other words, in a state in which the sheet discharge frame 131 is not stacked. Hereinafter, with reference to FIG. 3, using FIGS. 4A to 7, a wiring assembly configuration of a first embodiment will be described.

### Wiring Assembly Configuration

The image forming apparatus 1 of the first embodiment includes a wiring unit 203. As illustrated in FIGS. 4A and 4B, the wiring unit 203 includes wiring 201 that can be electrically connected to an electrical component, and a holding portion 202 that holds the wiring 201. The wiring 201 is eventually connected to the electrical component. In the imaging frame 121 (second frame), mounting portions are formed on a side of the discharge frame 131 in each of the rear and front side plates 124a and 124b. The wiring unit 203 is mounted to the mounting portions such that the holding portion 202 extends between the mounting portions of the rear and front side plates 124a and 124b. To be noted, in this case, the casing 1201 of the imaging block 120 corresponds to a second casing, and the casing 1301 of the sheet discharge block 130 corresponds to a first casing (refer to FIG. 2).

Here, as the mounting portion for the rear side plate 124a, a first engagement groove 1241 is provided in a part of the rear side plate 124a on the side of the sheet discharge frame 131. A first end portion 202a of the holding portion 202 on a side of the rear side plate 124a (first frame portion side) engages with the first engagement groove 1241. As the mounting portion of the front side plate 124b, a second engagement groove 1231 is disposed on the side of the sheet discharge frame 131 in a part of the front side plate 124b. A second end portion 202b of the holding portion 202 on a side of the front side plate 124b (second frame portion side) engages with the second engagement groove 1231. The first and second engagement grooves 1241 and 1231 are formed with openings that respectively allow the first and second end portions 202a and 202b of the holding portion 202 to vertically enter from the side of the sheet discharge frame 131. That is, the first and second engagement grooves 1241 and 1231 are formed such that, in the state in which the sheet discharge frame 131 is separated from the imaging frame 121, the wiring unit 203 can be vertically mounted from a side to which the sheet discharge frame 131 is connected. In the case of this embodiment, the wiring 201 is routed within the apparatus body 1A fully in the front/back direction when the wiring unit 203 is mounted to first and second engagement grooves 1241 and 1231.

During the manufacturing of the image forming apparatus 1, after a mounting step of mounting the wiring unit 203 in the imaging frame 121, a connecting step of connecting the sheet discharge and imaging frames 131 and 121 is performed. The sheet discharge frame 131 includes the rear side plate 134 that faces the rear side plate 124a with respect to the vertical direction in the state of being stacked onto the imaging frame 121. Further, the sheet discharge frame 131 includes the front lower frame portion 133d (refer to FIGS. 3A and 3B) that faces the front side plate 124b with respect to the vertical direction in the state of being stacked onto the imaging frame body 121. In the state in which the sheet discharge and imaging frames 131 and 121 are connected, the opening of the first engagement groove 1241 is closed by the rear side plate 134 of the sheet discharge frame 131. In addition, in the state in which the sheet discharge and imaging frames 131 and 121 are connected, the opening of the second engagement groove 1231 is closed by the front lower frame portion 133d of the sheet discharge frame 131. That is, when the sheet discharge and imaging frames 131 and 121 are in the stacked state, the openings are at least partially covered and the movement of the wiring unit 203 with respect to the imaging frame 131 in the vertical direction is restricted by the rear side plate 134 and the front lower frame portion 133d.

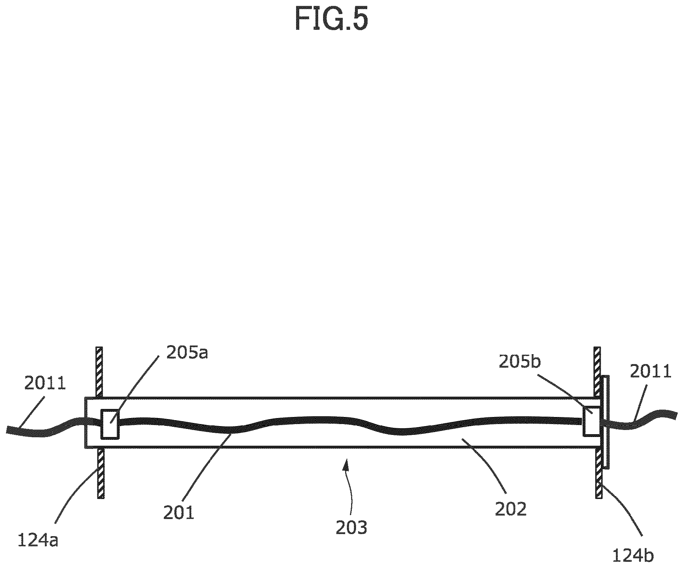

To be noted, as illustrated in FIG. 5, in the wiring unit 203, the wiring 201 is disposed on top of the holding portion 202 with a degree of flexibility. In addition, the wiring unit 203 may include relay connector portions 205a and 205b, serving as electrical components for electrically connecting to other wiring 2011. The relay connector portions 205a and 205b are preferably respectively disposed on the sides of the rear and front side plates 124a and 124b. Thereby, in a case where it is necessary to replace the wiring 201 due to any malfunction during the utilization of the image forming apparatus 1, the operator can perform the replacement of the wiring 201 without separating the sheet discharge and imaging frames 131 and 121 which are in the stacked state.

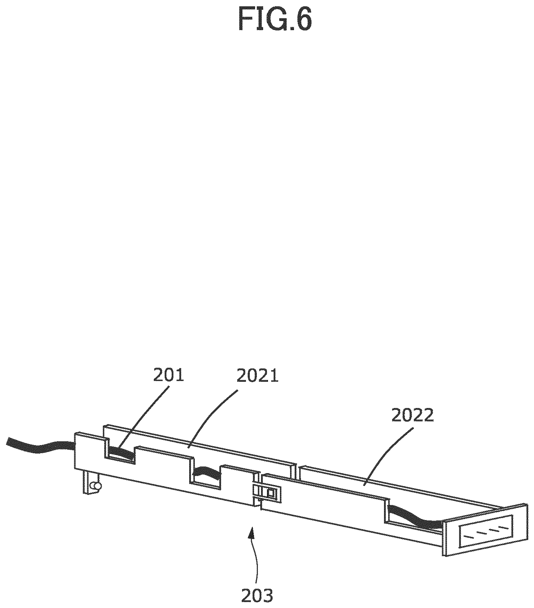

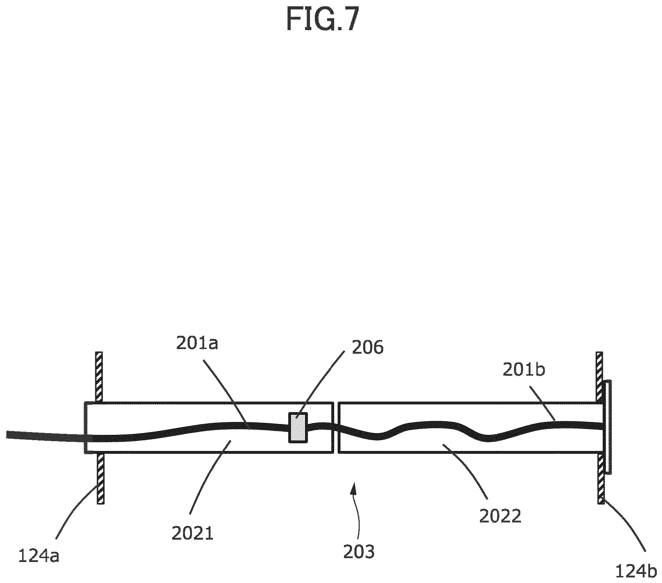

In addition, as illustrated in FIGS. 6 and 7, the holding portion 202 of the wiring unit 203 may be configured to be separated into at least two or more portions between the rear and front side plates 124a and 124b of the imaging frame 121. In the state in which the sheet discharge and imaging frames 131 and 121 are connected, a separated rear side holding portion 2021 (first holding portion) becomes removable from the first engagement groove 1241 to the outside of the rear side plate 124a, and a separated front side holding portion 2022 (second holding portion) becomes removable from the second engagement groove 1231 to the outside of the front side plate 124b. In addition, in this case, the wiring 201 is disposed in a manner separable into first wiring 201a and second wiring 201b, and the first and second wiring 201a and 201b are respectively held by the rear and front side holding portions 2021 and 2022. Then, either one of the rear and front side holding portions 2021 and 2022 includes a connector portion 206 for electrically connecting the first and second wiring 201a and 201b, which are separated. Thereby, in a case where it is necessary to replace the wiring 201 due to any malfunction during the utilization of the image forming apparatus 1, the operator can easily perform the replacement of the wiring 201 without separating the sheet discharge and imaging frames 131 and 121, which are in the stacked state.

As described above, in this embodiment, the three structures of the apparatus body 1A, namely the sheet supply, imaging, and sheet discharge blocks 110, 120, and 130, are separably connected to each other. Therefore, the sheet supply, imaging, and sheet discharge frames 111, 121, and 131 are configured to be separated from each other. Then, the wiring unit 203 including the wiring 201 is arranged between the sheet discharge and imaging frames 131 and 121, which are in the vertically stacked state. In the state in which the sheet discharge and imaging frames 131 and 121 are separated from each other, the operator can mount the wiring unit 203 in the vertical direction from the side to which the sheet discharge frame 131 is connected. Thereby, since the operator does not need to assemble the wiring unit 203 while maneuvering around the struts and stays constituting the image forming apparatus 1 for mounting the wiring 201 within the apparatus body 1A, labor requirements are reduced. The operator can easily route the wiring 201 in the imaging frame 121, which is in the separated state; in other words, the workability of the operation for mounting the wiring 201 within the apparatus body 1A can be further improved.

To be noted, while the wiring unit 203 described above is arranged between the sheet discharge and imaging frames 131 and 121, which are in the vertically stacked state, it is not limited to this, and the wiring unit 203 may be arranged between the imaging and sheet supply frames 121 and 111, which are in the vertically stacked state. In such a case, the first and second engagement grooves 1241 and 1231 described above are formed in the sheet supply frame 111 such that the wiring unit 203 can be mounted from the side of the imaging frame 121 in the vertical direction in a state in which the imaging frame 121 is separated from and not stacked onto the sheet supply frame 111. In addition, the wiring unit 203 may be arranged on the side of the imaging frame 121 in the sheet discharge frame 131 between the sheet discharge and imaging frames 131 and 121, which are in the vertically stacked state, and, further, on the side of the sheet supply frame 111 in the imaging frame 121 between the imaging and sheet supply frames 121 and 111, which are in the vertically stacked state.

### Second Embodiment

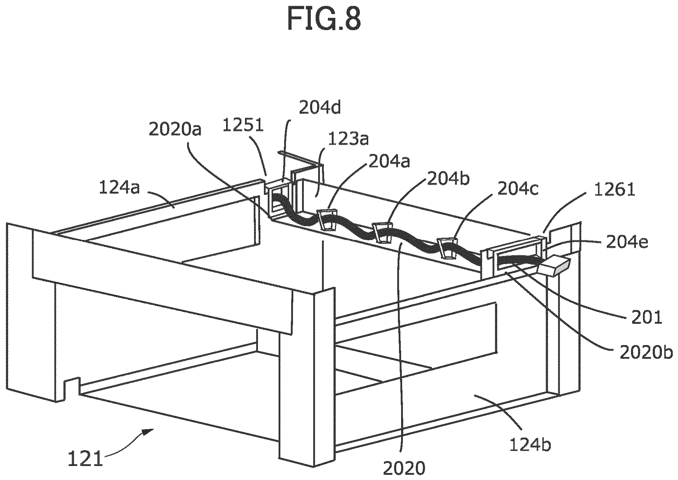

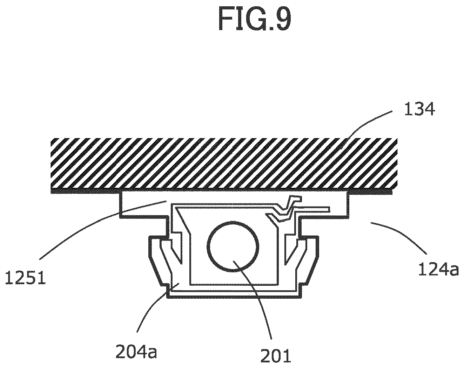

Next, with reference to FIG. 3, using FIGS. 8 and 9, a wiring assembly configuration of a second embodiment will be described. In the first embodiment, the entire wiring unit 203 is mounted to the mounting portions. In the second embodiment, the image forming apparatus is configured such that the operator mounts part of a wiring unit to a mounting portion. As illustrated in FIG. 8, the wiring assembly configuration of the second embodiment is provided with the wiring 201 that can be electrically connected to an electrical component, and a holding portion 2020 that holds the wiring 201. The holding portion 2020 is disposed on the side of the sheet discharge frame 131 in the imaging frame 121 so as to extend between the rear and front side plates 124a and 124b. In the imaging frame 121, the mounting portions, which enable the holding portion 2020 to be mounted to extend between the rear and front side plates 124a and 124b, are formed in parts of the rear and front side plates 124a and 124b on the side of the sheet discharge frame 131.

Here, as the mounting portions, examples are illustrated which include a first engagement groove 1251, which engages with a first end portion 2020a of the holding portion 2020 on the side of the rear side plate 124a (first frame portion side), formed on the side of the sheet discharge frame 131 in a part of the rear side plate 124a, and a second engagement groove 1261, which engages with a second end portion 2020b of the holding portion 2020 on the side of the front side plate 124b (second frame portion side), formed on the side of the sheet discharge frame 131 in a part of the front side plate 124b. The first and second engagement grooves 1251 and 1261 are formed with openings that respectively allow the first and second end portions 2020a and 2020b of the holding portion 2020 to enter in the vertical direction from the side of the sheet discharge frame 131. That is, the first and second engagement grooves 1251 and 1261 are formed such that the holding portion 2020 can be vertically mounted from the side of the sheet discharge frame 131 in the state in which the imaging frame 121 is separated from and not overlapped by the sheet discharge frame 131.

The holding portion 2020 is formed such that the wiring 201 can be vertically mounted from the side of the sheet discharge frame 131 in the state in which the imaging frame 121 is separated from and not overlapped by the sheet discharge frame 131. In particular, the holding portion 2020 includes a plurality of wire saddles 204a, 204b, and 204c, which allow the wiring 201 to enter from the side of the sheet discharge frame 131 and are arranged in a row from the rear side plate 124a toward the front side plate 124b. In addition, edge saddles 204d and 204e (referred to as edge saddles to distinguish them from wire saddles) are disposed at the first and second end portions 2020a and 2020b of the holding portion 2020. As illustrated in FIG. 9, the wire saddles 204a, 204b, and 204c hold the wiring 201 that is vertically pressed in from the side of the sheet discharge frame 131. One side on the side of the sheet discharge frame 131 in each of the edge saddles 204d and 204e is disposed in an openable and closable manner; thereby, by opening the one side on the side of the sheet discharge frame 131, it is possible to insert the wiring 201 from the vertical direction, and, by closing the one side on the side of the sheet discharge frame 131, it is possible to hold the inserted wiring 201.

As described above, in this embodiment, the holding portion 2020, including the wire saddles 204a, 204b, and 204c and the edge saddles 204d and 204e, is formed to allow the wiring 201 to be mounted vertically from the side of the sheet discharge frame 131 in the state in which the imaging and sheet discharge frames 121 and 131 are separated from each other. That is, the operator can mount the wiring 201 with respect to the wire saddles 204a, 204b, and 204c and the edge saddles 204d and 204e from the vertical direction. Thereby, since the operator does not need to assemble the wiring unit while maneuvering around the struts and stays constituting the image forming apparatus 1 for mounting the wiring 201 within the apparatus body 1A, labor requirements are reduced. As described above, the operator can easily route the wiring 201 in the imaging frame 121 in the separated and non-overlapped state; in other words, the workability of the operation for mounting the wiring 201 within the apparatus body 1A can be further improved.

To be noted, also in this embodiment, the wiring 201 is mounted and removed through the opening of the first engagement groove 1251, which is the same as in the first embodiment. Therefore, the plurality of wire saddles 204a to 204e may be eliminated. Instead of the wire saddles, the wiring 201 can be secured with double-sided adhesive tape or the like. In particular, for wiring with large planar surface areas such as flexible flat cables, double-sided adhesive tape is more effective than the wire saddle securing.

To be noted, while the holding portion 2020 described above is arranged between the sheet discharge and imaging frames 131 and 121, which are in the vertically stacked state, it is not limited to this, and the holding portion 2020 may be arranged between the imaging and sheet supply frames 121 and 111, which are in the vertically stacked state. In such a case, the holding portion 2020 is formed in the sheet supply frame 111 such that the first and second engagement groves 1261 and 1251 described above allow the wiring 201 to be mounted in the vertical direction from the side of the imaging frame 121 in the state in which the sheet supply frame 111 is separated from and not overlapped by the imaging frame 121. In addition, the holding portion 2020 may be arranged on the side of the imaging frame 121 in the sheet discharge frame 131 between the sheet discharge and imaging frames 131 and 121, which are in the vertically stacked state, and, further, on the side of the sheet supply frame 111 in the imaging frame 121 between the imaging and sheet supply frames 121 and 111, which are in the vertically stacked state.

### Third Embodiment

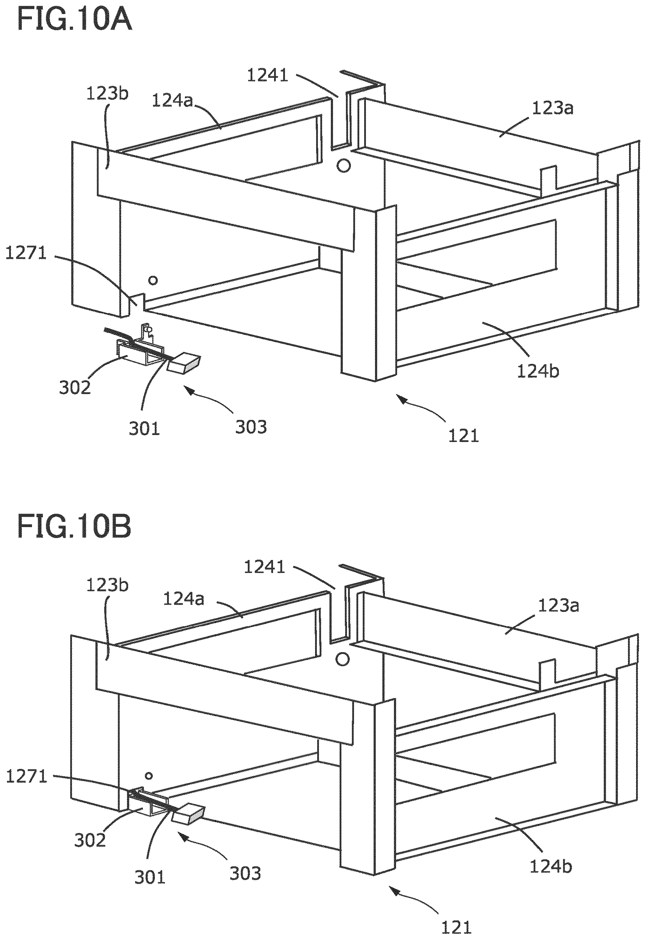

Next, with reference to FIG. 3, using FIGS. 10A and 10B, a wiring assembly configuration of a third embodiment will be described. As illustrated in FIGS. 10A and 10B, a wiring unit 303 includes wiring 301 that can be electrically connected to electrical components (such as a density sensor and a temperature/humidity sensor) arranged within the imaging frame 121 (within a second frame), and a holding portion 302 that holds the wiring 301. In the imaging frame 121, a mounting portion to which the wiring unit 303 can be mounted is formed on the side of the sheet supply frame 111 in a part of the rear side plate 124a.

Here, as the mounting portion, an example is illustrated which includes an engagement groove 1271 that is disposed on the side of the sheet supply frame 111 in a part of the rear side plate 124a (first frame portion) so as to engage with the holding portion 302. The engagement groove 1271 is formed with an opening that allows the holding portion 302 to enter from the side of the sheet supply frame 111 in the vertical direction while holding the wiring 301. That is, the engagement groove 1271 is formed such that the wiring unit 303 can be mounted from the side of the sheet supply frame 111 in the vertical direction in the state in which the imaging frame 121 is separated from and not stacked onto the sheet supply frame 111. In the case of this embodiment, when the wiring unit 303 is mounted to the engagement groove 1271, the wiring 301 is routed within the imaging frame 121 from the outside.

The sheet supply frame 111 includes the rear side plate 114 which faces the rear side plate 124a with respect to the vertical direction in the overlapped state with the imaging frame 121 (refer to FIGS. 3B and 3C). The opening of the engagement groove 1271 described above is closed by the rear side plate 114 of the sheet supply frame 111 in the state in which the imaging and sheet supply frames 121 and 111 are stacked. That is, when the imaging and sheet supply frames 121 and 111 are in the stacked state, the vertical movement of the wiring unit 303 with respect to the imaging frame 121 is restricted by the rear side plate 114. In addition, the wiring unit 303 mounted to the engagement groove 1271 is arranged to be separated from the front side plate 124b (second frame portion). This aspect is different from the wiring unit 203 of the first and second embodiments.

Also in this embodiment, similar to the first and second embodiments described above, since the operator does not need to assemble the wiring unit 303 while maneuvering around the struts and stays constituting the image forming apparatus 1 for mounting the wiring 301 within the apparatus body 1A, labor requirements are reduced. As described above, the operator can easily route the wiring 301 in the imaging frame 121 which is in the separated and non-overlapped state; in other words, the workability of the operation for mounting the wiring 301 within the apparatus body 1A can be further improved.

To be noted, while the wiring unit 303 described above is arranged between the imaging and sheet supply frame 121 and 111, which are in the vertically stacked state, it is not limited to this, and the wiring unit 303 may be arranged between the sheet discharge and imaging frames 131 and 121, which are in the vertically stacked state. In such a case, the engagement groove 1271 described above is formed in the sheet discharge frame 131 such that the wiring unit 303 can be mounted in the vertical direction from the side of the imaging frame 121 in the state in which the sheet discharge and imaging frames 131 and 121 are separated and not stacked. In addition, the wiring unit 303 described above may be arranged on the side of the imaging frame 121 in the sheet supply frame 111 between the imaging and sheet supply frames 121 and 111, which are in the vertically stacked state, and, further, on the side of the sheet discharge frame 131 in the imaging frame 121 between the sheet discharge and imaging frames 131 and 121, which are in the vertically stacked state.

### Fourth Embodiment

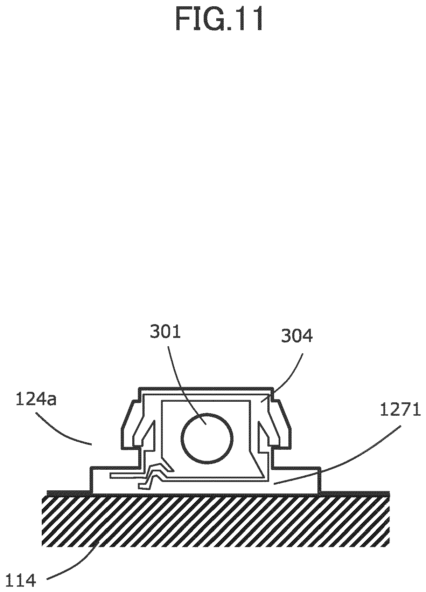

Next, with reference to FIGS. 3 and 10A, using FIG. 11, a wiring assembly configuration of a fourth embodiment will be described. As illustrated in FIG. 11, the wiring assembly configuration of the fourth embodiment includes the wiring 301 that can be electrically connected to electrical components (for example, such as a density sensor and a temperature/humidity sensor) arranged within the imaging frame 121 (within the second frame), and an edge saddle 304 (wire saddle), serving as a holding portion that holds the wiring 301. In the imaging frame 121, the engagement groove 1271, serving as a mounting portion that allows the edge saddle 304 to be mounted to the rear side plate 124a is formed on the side of the sheet supply frame 111 in a part of the rear side plate 124a (refer to FIG. 10A). The engagement groove 1271 is formed with an opening that allows the edge saddle 304 to enter from the side of the sheet supply frame 111 in the vertical direction. That is, the engagement groove 1271 is formed such that the edge saddle 304 can be mounted from the side of the sheet supply frame 111 in the vertical direction in the state in which the imaging frame 121 is separated from and not stacked onto the sheet supply frame 111.

The edge saddle 304 is formed such that the wiring 301 can be mounted from the side of the sheet supply frame 111 in the vertical direction in the state in which the imaging frame 121 is separated and not stacked onto the sheet supply frame 111. One side on the side of the sheet supply frame 111 in the edge saddle 304 is disposed in an openable and closable manner; thereby, by opening the one side on the side of the sheet supply frame 111, it is possible to insert the wiring 301 from the vertical direction, and, by closing the one side on the side of the sheet supply frame 111, it is possible to hold the inserted wiring 301.

Also in this embodiment, similar to the first and second embodiments described above, since the operator does not need to assemble the wiring unit while maneuvering around the struts and stays constituting the image forming apparatus 1 for mounting the wiring 301 within the apparatus body 1A, labor requirements are reduced. As described above, the operator can easily route the wiring 301 within the imaging frame body 121 in the separated and non-stacked state; in other words, the workability of the operation for mounting the wiring 301 within the apparatus body 1A can be further improved.

To be noted, while the edge saddle 304 described above is arranged between the imaging and sheet supply frames 121 and 111 which are in the vertically stacked state, it is not limited to this, and the edge saddle 304 may be arranged between the sheet discharge and imaging frames 131 and 121 which are in the vertically stacked state. In such a case, the engagement groove 1271 described above is formed in the sheet discharge frame 131 such that the edge saddle 304 allows the wiring 301 to be mounted from the side of the imaging frame 121 in the vertical direction in the state in which the sheet discharge and imaging frames 131 and 121 are separated and not stacked. In addition, the edge saddle 304 described above may be arranged on the side of the imaging frame 121 in the sheet supply frame 111 between the imaging and sheet supply frames 121 and 111 which are in the vertically stacked state, and, further, on the side of the sheet discharge frame 131 in the imaging frame 121 between the sheet discharge and imaging frames 131 and 121 which are in the vertically stacked state.

The wiring unit (203) includes a holding portion (202) configured to hold the wiring (201). In the state in which the first casing (1301) is separated from the second casing (1201), and the holding portion (202) is configured to be mounted to the second frame (121) from the side to which the first frame (131) is connected. The second frame (121) includes a first frame portion (124a) and a second frame portion (124b) that is arranged to be separated from the first frame portion (124a), and the holding portion (202, 2020) of the wiring unit (203) is configured to be mounted to extend between the first frame portion (124a) and the second frame portion (124b). The wiring unit (203) includes a holding portion (2020) that is configured to hold the wiring (201), and a plurality of wire saddles (204a - 204c) that are disposed in the holding portion (2020). The second frame (121) includes a first frame portion (124a) and a second frame portion (124b) that is arranged to be separated from the first frame portion (124a), and the holding portion (202, 2020) of the wiring unit (203) is configured to be mounted to extend between the first frame portion (124a) and the second frame portion (124b). The wiring unit (203) includes a connector (205a, 205b) that is configured to be connected to the wiring (201).

Various embodiments have been described in detail above but it will be understood that the present disclosure is not limited to these embodiments and encompasses all modifications, variants, alternatives and equivalents falling within the scope of the appended claims.

## Claims

1. An image forming apparatus (1) configured to form an image on a recording material, the image forming apparatus (1) comprising:
a first casing (1301) including a first frame (131);
a second casing (1201) including a second frame (121), the second casing (1201) being connected to the first casing (1301) and configured to be separable in a vertical direction from the first casing (1301); and
a wiring unit (203) including wiring (201) connected to an electrical component,
wherein the second frame (121) includes a mounting portion (1231, 1241, 1251, 1261) to which the wiring unit (203) is mounted,
wherein the mounting portion (1231, 1241, 1251, 1261) is provided with at least one opening on a side facing the first frame (131), and
wherein the opening is at least partially covered by a part of the first frame (131) in a state in which the first casing (1301) and the second casing (1201) are connected to each other.

2. The image forming apparatus (1) according to claim 1,
wherein the second frame (121) includes a first frame portion (124a) and a second frame portion (124b) that is arranged to be separated from the first frame portion (124a),
wherein the mounting portion (1231, 1241, 1251, 1261) includes a first mounting portion (1231, 1251)that is disposed in the first frame portion (124a), and a second mounting portion (1241, 1261) that is disposed in the second frame portion (124b),
wherein the at least one opening includes an opening that is disposed in the first mounting portion (1231, 1251) and is closed by the first frame (131), and an opening that is disposed in the second mounting portion (1241) and is closed by the first frame (131), and
wherein the wiring unit (203) is configured to be mounted to extend between the first mounting portion (1231, 1251) and the second mounting portion (1241, 1261).

3. The image forming apparatus (1) according to claim 1,
wherein the second frame (121) includes a first frame portion (124a) and a second frame portion (124b) that is arranged to be separated from the first frame portion (124a),
wherein the mounting portion (1231, 1241, 1251, 1261) is disposed in the first frame portion (124a), and
wherein the wiring unit (203) mounted to the mounting portion (1231, 1241, 1251, 1261) is arranged to be separated from the second frame portion (124b).

4. The image forming apparatus (1) according to claim 1,
wherein the wiring unit (203) includes a holding portion (202, 2020) that is configured to hold the wiring (201), and
wherein, in a state in which the first casing (1301) is separated from the second casing (1201), the holding portion (202, 2020) is configured to be removed from the second frame (121) through the opening of the mounting portion (1231, 1241, 1251, 1261).

5. The image forming apparatus (1) according to claim 4,
wherein the second frame (121) includes a first frame portion (124a) and a second frame portion (124b) that is arranged to be separated from the first frame portion (124a),
wherein the mounting portion (1231, 1241, 1251, 1261) includes a first mounting portion (1231, 1241) that is disposed in the first frame portion (124a), and a second mounting portion (1241, 1261) that is disposed in the second frame portion (124b),
wherein the at least one opening includes an opening that is disposed in the first mounting portion (1231, 1251) and is closed by the first frame (131), and an opening that is disposed in the second mounting portion (1241, 1261) and is closed by the first frame (131), and
wherein the wiring unit (203) is configured to be mounted to extend between the first mounting portion (1231, 1241) and the second mounting portion (1241, 1261).

6. The image forming apparatus (1) according to claim 1,
wherein, in a state in which the first casing (1301) is separated from the second casing (1201), the wiring (201) is configured to be removed from the second frame (121) through the opening of the mounting portion (1231, 1241, 1251, 1261).

7. The image forming apparatus (1) according to claim 6,
wherein the wiring unit (203) includes a holding portion (2020) that is configured to hold the wiring (201), and a plurality of wire saddles (204a-204c) that are disposed in the holding portion (2020).

8. The image forming apparatus (1) according to claim 7,
wherein the second frame (121) includes a first frame portion (124a) and a second frame portion (124b) that is arranged to be separated from the first frame portion (124a),
wherein the mounting portion (1231, 1241, 1251, 1261) includes a first mounting portion (1231, 1251) that is disposed in the first frame portion (124a), and a second mounting portion (1241, 1261) that is disposed in the second frame portion (124b),
wherein the at least one opening includes an opening that is disposed in the first mounting portion (1231, 1251) and is closed by the first frame (131), and an opening that is disposed in the second mounting portion (1241, 1261) and is closed by the first frame (131), and
wherein the holding portion (202) of the wiring unit (203) is configured to be mounted to extend between the first mounting portion (1231, 1251) and the second mounting portion (1241, 1261).

9. The image forming apparatus (1) according to claim 1,
wherein the wiring unit (203) includes a connector that is configured to be connected to the wiring (201).

10. An image forming apparatus (1) configured to form an image on a recording material, the image forming apparatus (1) comprising:
a first casing (1301) including a first frame (131);
a second casing (1201) including a second frame, the second casing (1201) being connected to the first casing (1301) and configured to be separable in a vertical direction from the first casing (1301); and
a wiring unit (203) including wiring (201) connected to an electrical component,
wherein, in a state in which the first casing (1301) and the second casing (1201) are separated from each other, at least part of the wiring unit (203) is configured to be mountable onto a side of the second frame (121) onto which the first frame (131) is connected.

11. The image forming apparatus (1) according to claim 10,
wherein the second frame (121) includes a first frame portion (124a) and a second frame portion (124b) that is arranged to be separated from the first frame portion (124a), and
wherein the wiring unit (203) is configured to be mounted to extend between the first frame portion (124a) and the second frame portion (124b).

12. The image forming apparatus (1) according to claim 10,
wherein the second frame includes a first frame portion (124a) and a second frame portion (124b) that is arranged to be separated from the first frame portion (124a),
wherein a mounting portion (1231, 1241, 1251, 1261) is disposed in the first frame portion (124a), and
wherein the wiring unit (203) mounted to the first frame portion (124a) is arranged to be separated from the second frame portion (124b).

13. The image forming apparatus (1) according to claim 10,
wherein, in the state in which the first casing (1301) is separated from the second casing (1201), the wiring (201) is configured to be mounted to the second frame (121) from the side to which the first frame (131) is connected.

14. The image forming apparatus according to claim 10,
wherein the second frame (121) includes a first frame portion (124a), a second frame portion (124b) that is arranged to be separated from the first frame portion (124a), a first mounting portion (1231,) that is disposed in the first frame portion (124a), and a second mounting portion (1241) that is disposed in the second frame portion (124b),
wherein the wiring (201) includes first wiring (201a) and second wiring (201b);
wherein the wiring unit (203) includes a first holding portion (2021) that is configured to be mounted to the first mounting portion (1231) and is configured to hold the first wiring(201a), and a second holding portion (2022) that is configured to be mounted to the second mounting portion (1241) and is configured to hold the second wiring (201b), and
wherein the wiring unit (203) further includes a connecting connector (206) that is configured to connect the first wiring (201a) and the second wiring (201b).

15. A method for manufacturing an image forming apparatus configured to form an image on a recording material, the method comprising:
a mounting step of mounting a wiring unit (203) that includes a wiring; and
a connecting step of connecting a first casing (1301) including a first frame (131) and a second casing (1201) including a second frame (121) to each other,
wherein, in the mounting step, the wiring unit (203) is mounted to the second frame (121) of the second casing (1201) onto a first side of the second casing (1201),
wherein, in the connecting step, the first casing (1301) is connected to the second casing (1201) onto the first side of the second casing (1201), and
wherein the connecting step is performed after the mounting step.
